# FASCICULE DE BREVET EUROPEEN

(11) **EP 2 456 053 B1**
(45) Date de publication et mention de la délivrance du brevet: **11.09.2019**
(21) Numéro de dépôt: 11189022.4
(22) Date de dépôt: 14.11.2011
(51) Int. Cl.: H02K 5/24

(54) **DISPOSITIF DE SUPPORT-MOTEUR, EN PARTICULIER POUR UN GROUPE MOTO-VENTILATEUR**
MOTORBEFESTIGUNGSVORRICHTUNG, INSBESONDERE FÜR EINE KÜHLERVENTILATORGRUPPE
MOTOR SUPPORTING DEVICE, IN PARTICULAR FOR AN ELECTRIC FAN UNIT

(30) Priorité: 17.11.2010 FR 1004474
(43) Date de publication de la demande: 23.05.2012
(73) Titulaire: Valeo Systemes Thermiques, 78321 Le Mesnil Saint Denis (FR)
(72) Inventeur: Legot, Laurent, 75020 PARIS (FR); Duputel, Patrick, 95240 CORMEILLES EN PARISIS (FR); Barbier, Thierry, 78760 JOUARS PONTCHARTRIN (FR); Gontier, Cyril, 72470 CHAMPAGNÉ (FR); Pierres, Philippe, 78990 ELANCOURT (FR); Queinnec, Jean-Yves, 78990 ELANCOURT (FR)
(74) Mandataire: Metz, Gaëlle

(56) Documents cités:
- DE-A1- 4 306 588
- DE-A1- 19 706 852
- DE-C1- 4 240 776

## Description

L'invention se rapporte à un dispositif de support-moteur destiné notamment à un groupe moto-ventilateur.

Un tel dispositif de support-moteur trouve une application particulière dans les installations de chauffage, ventilation et/ou climatisation des véhicules automobiles.

Dans un tel dispositif, un moteur, habituellement électrique, entraîne alors une roue de pulseur, ou turbine, apte à générer un flux d'air destiné à circuler dans l'installation de chauffage, ventilation et/ou climatisation.

Plus particulièrement, l'invention concerne un dispositif de support-moteur, comprenant une bague intérieure apte à loger le moteur électrique, une bague extérieure apte à loger la bague intérieure et au moins un élément de découplage interposé entre la bague intérieure et la bague extérieure.

Dans un tel dispositif, la bague intérieure est logée dans la bague extérieure qui fait partie intégrante d'un support. Un élément de découplage permet d'empêcher la transmission de vibrations du moteur à l'ensemble de l'installation de chauffage, ventilation et/ou climatisation en évitant de créer des ondes acoustiques et des vibrations gênantes pour le confort des passagers du véhicule.

Lorsque l'on parle ici d'un élément de découplage, on entend désigner un seul ou plusieurs éléments distincts, par exemple au nombre de trois, disposés, par exemple à des intervalles angulaires égaux, entre la bague intérieure et la bague extérieure.

Un dispositif de support-moteur de ce type est notamment connu du document FR 2 926 411.

Le document DE 197 06 852 A1 décrit un dispositif de support-moteur, comprenant une bague intérieure apte à loger un moteur, une bague extérieure apte à loger la bague intérieure, dans lequel au moins un élément de découplage est interposé entre la bague intérieure et la bague extérieure, ce dispositif de support-moteur comprend au moins une butée pour limiter les déplacements relatifs de la bague intérieure par rapport à la bague extérieure.

Dans un tel dispositif de support-moteur, l'élément de découplage est réalisé dans une matière plastique appropriée, en particulier un caoutchouc naturel ou synthétique, comportant des propriétés absorbantes.

La mise au point d'un tel dispositif de support-moteur est compliquée, car il est nécessaire d'assurer une bonne tenue mécanique de la bague intérieure dans la bague extérieure, et, également, d'autoriser des amplitudes de déplacements relatifs entre la bague intérieure et la bague extérieure, dans des conditions contrôlées, pour que le ou les éléments de découplage puisse(nt) exercer l'effet d'amortissement désiré.

Autrement dit, il faut assurer une tenue mécanique, entre la bague intérieure et la bague extérieure, qui ne soit pas rigide, et qui puisse autoriser une course de débattement réduite, typiquement de l'ordre de ± 1 mm, dans la direction de l'axe de rotation du moteur électrique et dans la direction de rotation autour de l'axe de rotation du moteur électrique.

En effet, si l'on autorise un débattement de mouvement d'amplitude plus importante, il existe un risque de détérioration, pouvant aller jusqu'à la rupture mécanique, du ou des éléments de découplage, entraînant une perte d'amortissement.

La tenue mécanique entre la bague intérieure et la bague extérieure avec une course de débattement a été réalisée jusqu'à présent par l'ajout d'une pièce complémentaire, notamment fixée par des vis, ce qui complique la structure du dispositif de support-moteur et les opérations d'assemblage des différents éléments qui constituent le dispositif de support-moteur.

L'invention a notamment pour but de surmonter un tel inconvénient. Elle vise notamment un dispositif de support-moteur dans lequel la tenue mécanique avec jeu ou course de débattement peut être obtenue sans pièce additionnelle.

L'invention propose à cet effet un dispositif de support-moteur suivant la revendication indépendante 1.

Préférentiellement, la butée s'étend dans une direction généralement radiale par rapport à un axe de rotation d'un moteur maintenu par le dispositif de support-moteur. La butée assure une bonne tenue mécanique de la bague intérieure par rapport à la bague extérieure, tout en procurant des déplacements relatifs, avec un jeu réduit, en translation et/ou en rotation, dans des conditions contrôlées.

Cela permet à au moins un élément de découplage interposé entre la bague intérieure et la bague extérieure d'assurer pleinement sa fonction d'amortissement, sans qu'il risque d'être détérioré par des déplacements relatifs d'amplitude importante entre la bague intérieure et la bague extérieure.

Suivant l'invention, la butée comporte un pion coopérant avec au moins un logement de réception et le pion est reçu avec jeu dans le logement de réception.

Selon un mode particulier de réalisation, le logement de réception est traversant. Dans ce cas, avantageusement, le pion traverse radialement la bague intérieure et/ou la bague extérieure avec un jeu réduit.

Le dispositif de support-moteur selon la présente invention comprend un capot.

Selon cet agencement, le capot comprend une patte sur laquelle est agencé le pion ou le logement de réception ou un réceptacle en forme de cuvette apte à recevoir le pion avec un jeu réduit.

De plus, la patte comporte une rampe intérieure apte à coopérer avec le pion lors de la mise en place du capot pour permettre à la patte de s'écarter radialement vers l'extérieur puis de se rapprocher radialement vers l'intérieur pour la réception du pion dans le logement de réception et/ou le réceptacle.

Une forme particulière de réalisation est telle que le pion présente une section transversale en forme de croix.

Dans les différentes formes de réalisation précitées, on préfère utiliser deux butées, préférentiellement non alignées pour éviter de former conjointement un axe de rotation.

De plus, l'invention concerne un groupe moto-ventilateur comprenant un moteur entraînant une roue de pulseur ou une turbine et supporté par un dispositif de support-moteur tel que défini précédemment.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation, mais aussi, le cas échéant, contribuer à sa définition sur lesquels:
- la figure 1 est une vue en perspective éclatée d'un groupe moto-ventilateur comportant un dispositif de support-moteur selon la présente invention,
- la figure 2 est une vue en perspective montrant le groupe moto-ventilateur de la figure 1 à l'état assemblé,
- les figures 3 et 4 est une vue en perspective et en coupe du dispositif de support-moteur selon la présente invention,
- la figure 5 est une vue en perspective et en coupe du dispositif de support-moteur des figures 3 et 4 à l'état assemblé,
- la figure 6 est une vue schématique en coupe d'une variante de réalisation du dispositif de support-moteur selon la présente invention,
- la figure 7 est une vue en perspective éclatée du groupe moto-ventilateur comportant un dispositif de support-moteur selon une autre variante de réalisation, et
- la figure 8 est une vue en perspective et en coupe du dispositif de support-moteur de la figure 7 l'état assemblé.

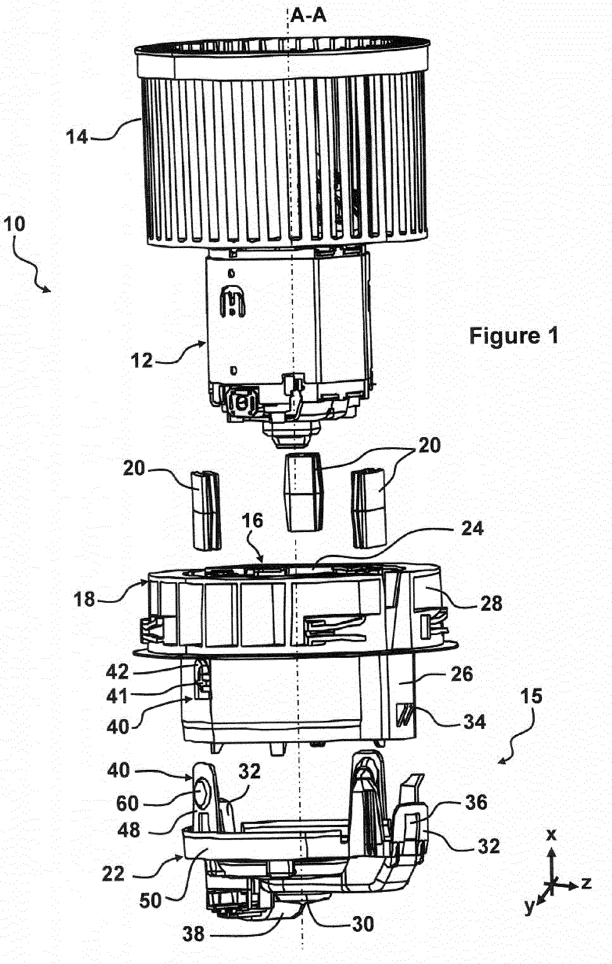

On se réfère, tout d'abord à la figure 1 qui est une vue en perspective éclatée d'un groupe moto-ventilateur 10 comportant un dispositif de support-moteur 15 selon la présente invention.

Notamment, la figure 1 représente le groupe moto-ventilateur 10 comprenant un moteur électrique 12, comprenant un axe de rotation A-A. Le moteur électrique 12 comporte un arbre moteur (non visible sur la figure 1) s'étendant suivant l'axe de rotation A-A. L'arbre moteur porte une roue de pulseur 14, ou turbine 14, propre à générer un flux d'air.

L'axe de rotation A-A détermine une direction axiale x. La direction axiale x définit un dièdre direct avec des directions radiales y et z.

Dans l'exemple présenté, le groupe moto-ventilateur 10 est destiné à faire partie d'une installation de chauffage, ventilation et/ou climatisation d'un véhicule automobile. La roue de pulseur 14 est destinée à être logée à l'intérieur d'une volute (non représentée) aménagée pour la circulation du flux d'air.

Le groupe moto-ventilateur 10 comporte un dispositif de support-moteur 15. Le dispositif de support-moteur 15 comprend, notamment, une bague intérieure 16, une bague extérieure 18, au moins un élément de découplage 20, par exemple au nombre de trois selon l'exemple présenté, et un capot 22.

Sur la figure 1, la bague intérieure 16 est représentée à l'état assemblé, c'est-à-dire logée à l'intérieur de la bague extérieure 18. En effet, selon un mode de réalisation avantageux, la bague intérieure 16 et la bague extérieure 18 sont moulées simultanément dans un même moule, dans un agencement correspondant à l'état assemblé du dispositif de support-moteur 15.

La bague intérieure 16 comporte une paroi périphérique 24. La paroi périphérique 24 est, avantageusement, de forme générale cylindrique, entourant le moteur électrique 12. La bague intérieure 16 est destinée à être logée dans la bague extérieure 18 avec interposition des éléments de découplage 20.

Les éléments de découplage 12 sont disposés dans un espace annulaire défini entre la bague intérieure 16 et la bague extérieure 18.

La bague extérieure 18 comprend une paroi périphérique 26, avantageusement de forme générale cylindrique, entourée sur une partie de sa hauteur par une couronne 28. La couronne 28 est destinée, plus particulièrement, au montage du dispositif de support-moteur 15 sur un boîtier (non représenté) de l'installation de chauffage, ventilation et/ou climatisation du véhicule automobile.

La paroi périphérique 24 de la bague intérieure 16 et la paroi périphérique 26 de la bague extérieure 18 sont généralement concentriques et délimitent entre elles l'espace annulaire dans lequel sont disposés les éléments de découplage 20.

Le capot 22 est destiné à venir coiffer et fermer la bague extérieure 18 à l'une de ses extrémités, à l'opposé de la roue de pulseur 14. Le capot 22 comprend une paroi de fond 30.

Afin d'assembler le capot 22 sur la bague extérieure 18, la paroi de fond 30 est prolongée par au moins une languette 32, par exemple au nombre de deux selon le mode présenté, coopérant avec un ergot 34 agencé sur la paroi périphérique 26 de la bague extérieure 18. La paroi périphérique 26 de la bague extérieure 18 comporte autant d'ergot 34 que le capot 22 comporte de languettes 32.

Selon l'exemple présenté, les languettes 32 s'étendent dans la direction axiale x. Par ailleurs, les ergots 34 coopérant avec les languettes 32 sont formés en saillie sur la paroi périphérique 26 de la bague extérieure 18.

Les languettes 32 comprennent, respectivement, une ouverture 36 destinée à la réception d'un ergot 34 pour assurer l'assemblage du capot 22 sur la bague extérieure 18 dans une position définie. La languette 32 et l'ergot 34 assurent conjointement une fonction de clipage.

La bague intérieure 16 et la bague extérieure 18 sont réalisées dans une matière plastique appropriée, par exemple en polypropylène, avantageusement moulées simultanément au cours d'une même opération de moulage, dans leur état d'assemblage.

Selon la présente invention, les éléments de découplage 20 sont disposés à des intervalles angulaires égaux. Selon l'exemple de réalisation présenté, les éléments de découplage 20 sont donc espacés de 120°.

Les éléments de découplage 20 sont réalisés dans une matière amortissante, par exemple en caoutchouc naturel ou synthétique, et sont interposés entre une face extérieure de la paroi périphérique 24 de la bague intérieure 16 et une face intérieure de la paroi périphérique 26 de la bague extérieure 18. Avantageusement, la mise en place des éléments de découplage 20 s'effectue par surmoulage entre la bague intérieure 16 et la bague extérieure 18 après l'opération de moulage et/ou simultanément à l'opération de moulage, la bague intérieure 16 et la bague extérieure 18 étant encore placées dans le moule.

Le procédé conjoint de moulage de la bague intérieure 16 et la bague extérieure 18 et de surmoulage des éléments de découplage 20 s'effectue de façon analogue à celui décrit dans le document FR 2 926 411.

Alternativement, les éléments de découplage 20 sont des éléments rapportés et fixés sur la face extérieure de la paroi périphérique 24 de la bague intérieure 16 et/ou sur la face intérieure de la paroi périphérique 26 de la bague extérieure 18.

La paroi de fond 30 du capot 22 comprend, également, un bossage 38 aménagé pour loger un connecteur électrique pour l'alimentation du moteur électrique 12.

Le capot 22 est avantageusement réalisé dans la même matière plastique que la bague intérieure 16 et la bague extérieure 18. Le capot 22 est obtenu lors d'une opération de moulage séparée. Le capot 22 est alors une pièce séparée, telle que présentée sur les diverses figures.

Toutefois, alternativement, il est possible de réaliser le capot 22 avec la bague extérieure 18 sous la forme d'un élément moulé monobloc.

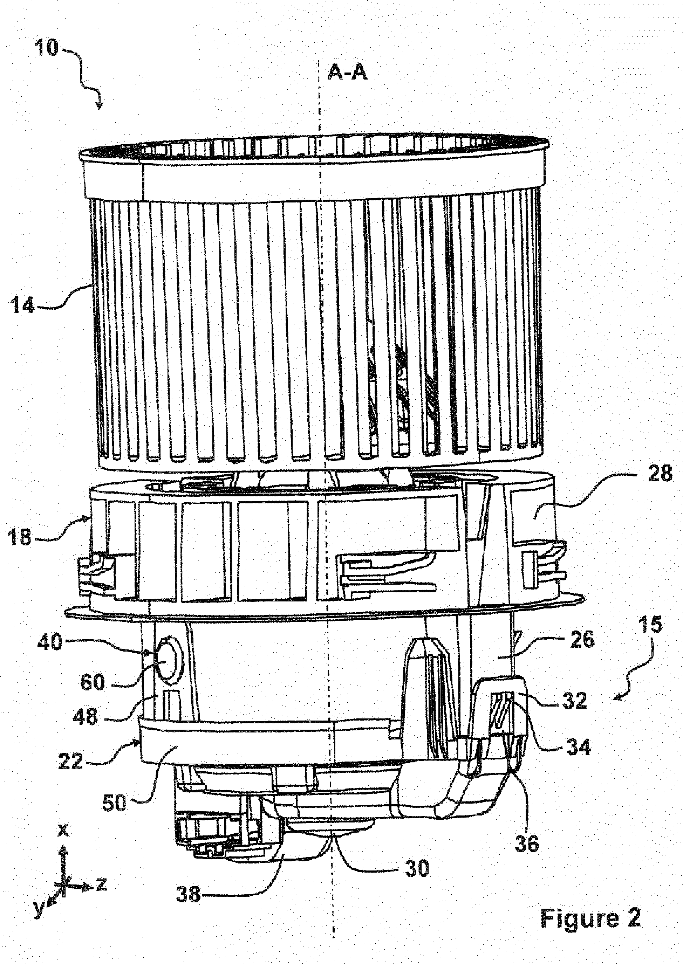

La figure 2 est une vue en perspective montrant le groupe moto-ventilateur 10 de la figure 1 à l'état assemblé et montre les différents éléments constituant le dispositif de support-moteur 15.

La bague intérieure 16 est reçue dans la bague extérieure 18, comme déjà représentée sur la figure 1, et la bague extérieure 18 est fermée par le capot 22.

Comme précédemment indiqué, dans un tel dispositif de support-moteur 15, il est nécessaire de prévoir des moyens pour limiter le déplacement relatif de la bague intérieure 16 et la bague extérieure 18 dans la direction axiale x et/ou dans la direction radiale y et/ou z, c'est-à-dire à la fois en translation, notamment dans la direction de l'axe de rotation AA, et/ou en rotation, notamment autour de l'axe de rotation AA.

L'invention prévoit pour cela au moins une butée 40. La butée 40 permet de limiter le déplacement relatif de la bague intérieure 16 et la bague extérieure 18 en translation et/ou en rotation.

Préférentiellement, la butée 40 traverse radialement la bague intérieure 16 et/ou la bague extérieure 18. Dans l'exemple de réalisation, le dispositif de support-moteur 15 comporte deux butées 40.

Avantageusement, la butée 40 est constituée par un pion intérieur 41 issues de la paroi périphérique 24 de la bague intérieure 16. En particulier, le pion intérieur 41 est obtenu par moulage avec la bague intérieure 16 et fait saillie vers l'extérieur dans une direction radiale y par rapport à l'axe de rotation A-A.

Selon l'exemple présenté, le pion intérieur 41 présente une section transversale en forme de croix, mais d'autres formes sont envisageables, comme par exemple des formes cylindriques. La forme de croix permet d'assurer une rigidité du pion intérieur 41.

Il est possible aussi, en variante, de rapporter le pion intérieur 41 sur la paroi périphérique 24 au lieu de les réaliser lors du moulage de la bague intérieure 16. Le pion intérieur 41 est alors fixé sur la paroi périphérique 24 de la bague intérieure 16, par exemple, par collage, vissage ou tout procédé d'assemblage analogue.

Le pion intérieur 41 fait saillie vers l'extérieur de la paroi périphérique 24 pour pouvoir être reçu dans un logement de réception extérieur 42 respectif aménagé dans la paroi périphérique 26 de la bague extérieure 18.

Afin de régler et limiter la course de débattement en translation, notamment dans la direction de l'axe de rotation AA, et/ou en rotation, notamment autour de l'axe de rotation AA, les dimensions du pion intérieur 41 et/ou du logement de réception extérieur 42 sont adaptées en conséquence.

On s'arrange, toutefois, que le porte-à-faux ainsi engendré ne soit pas trop important pour que les butées 40 ne soient pas trop sollicitées en utilisation.

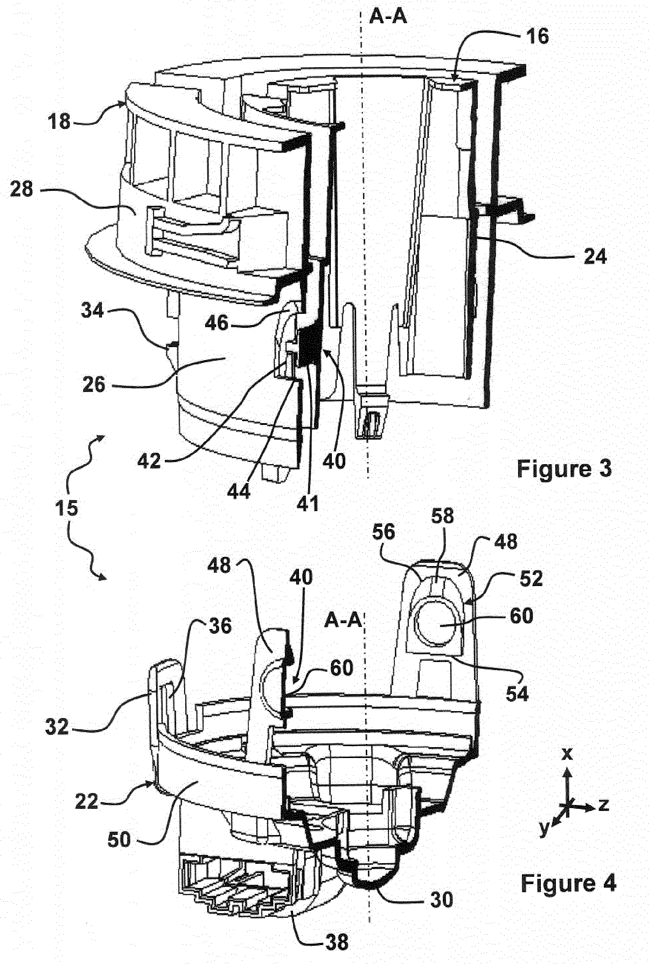

Les figures 3 à 5 sont des vues en coupe du dispositif de support-moteur 15, respectivement, à l'état éclaté et à l'état assemblé.

Sur ces figures, le logement de réception extérieur 42 est traversant, c'est-à-dire qu'il débouche sur les deux faces opposées de la paroi périphérique 26 de la bague extérieure 18. En outre, le pion intérieur 41 traverse au moins en partie l'épaisseur de la paroi périphérique 26 de la bague extérieure 18.

En variante, le logement de réception extérieur 42 pourrait être réalisée non débouchant, donc borgne, pour contenir le pion intérieur 41.

Préférentiellement, le dispositif de support-moteur 15 comprend au moins deux butées 40, tel que présenté. En conséquence, la paroi périphérique 24 de la bague intérieure 16 comporte au moins deux pions intérieurs 41 coopérant avec au moins deux logements de réception extérieur 42 de la paroi périphérique 26 de la bague extérieure 18.

Avantageusement, les deux pions intérieurs 41 sont disposés de manière non alignée, c'est-à-dire que leurs axes longitudinaux respectifs viennent couper l'axe AA et ne sont pas alignés entre eux. L'avantage d'une telle configuration est d'éviter que les pions intérieurs 41 forment conjointement un axe de rotation susceptible de créer un mouvement de rotation relatif entre la bague intérieure 16 et la bague extérieure 18, qui serait préjudiciable au bon fonctionnement de l'amortissement.

En effet, la difficulté est de créer un amortissement entre la bague intérieure 16 et la bague extérieure 18 tout en limitant, de manière contrôlée, les déplacements relatifs de la bague intérieure 16 par rapport la bague extérieure 18 pour éviter que les éléments de découplage 20 ne soient soumis à des contraintes élevées susceptibles de les endommager, pouvant aller jusqu'à la rupture mécanique, et de les rendre inopérants ou inefficaces.

Comme on peut le voir plus particulièrement sur les figures 1 et 3, avantageusement, le logement de réception extérieur 42 a la forme d'une fenêtre en ogive.

A cet effet, le logement de réception extérieur 42 comporte un premier bord 44, rectiligne tel que présenté, ou en forme d'arc de cercle ayant un axe de symétrie parallèle à l'axe de rotation A-A. Le logement de réception extérieur 42 comporte également un deuxième bord 46, en forme d'ogive ayant un axe de symétrie parallèle à l'axe de rotation A-A.

De plus, avantageusement, le deuxième bord 46 du logement de réception extérieur 42 forme une pente entre la face extérieure et la face intérieure de la paroi périphérique 26, comme on le voit le mieux sur la figure 3. Un tel agencement permet d'assurer une fonction de centrage.

Le logement de réception extérieur 42 est dimensionné pour recevoir le pion intérieur 41 correspondant. L'insertion du pion intérieur 41 dans le logement de réception extérieur 42 se fait avec un jeu déterminé. Le jeu ainsi obtenu est par exemple de l'ordre de ± 5 mm.

En pratique, ce jeu est obtenu lors du moulage par une partie du moule conçue en conséquence, qui assure le moulage conjoint de la bague intérieure 16 et la bague extérieure 18. Il est nécessaire que la partie du moule prévue à cet effet présente une épaisseur suffisante pour des questions de résistance mécanique.

Par conséquent, après démoulage de la bague intérieure 16 et de la bague extérieure 18, entre lesquelles ont été surmoulés les éléments de découplage 20, on obtient un ensemble composé de la bague intérieure 16 et de la bague extérieure 18 avec interposition des éléments de découplage 20, mais dont les amplitudes de déplacements relatifs sont importantes, de l'ordre de ± 5 mm.

Selon certaines configurations des éléments de découplage 20, le jeu de l'ordre de ± 5 mm peut être encore trop important, ce qui risquerait de compromettre la tenue mécanique des éléments de découplage 20, ces derniers risquant de se détériorer et se rompre.

Afin de compléter le contrôle des déplacements des butées 40 et limiter le jeu des pions intérieurs 41 dans les logements de réception extérieur 42 respectifs, on prévoit des moyens de limitation complémentaires, avantageusement agencés sur le capot 22.

Pour ce faire, chaque moyen de limitation complémentaire comprend au moins une patte 48 qui s'étend, dans la direction axiale, depuis un bord 50 du capot 22 à l' opposé de la paroi de fond 30.

Avantageusement, le bord 50 porte également les languettes 32.

La patte 48 comporte un bossage 52 formé en saillie vers l'intérieur et comportant un contour correspondant au contour du logement de réception extérieur 42. En particulier, le bossage 52 comporte un premier contour 54 destiné à venir s'engager avec le premier bord 44 du logement de réception extérieur 42 et un deuxième contour 56 destiné à venir s'engager avec le deuxième bord 46 du logement de réception extérieur 42.

Optionnellement, le deuxième contour 56 comporte une rampe intérieure 58 apte à coopérer avec le deuxième bord 46 du logement de réception extérieur 42, de sorte que, lors de la mise en place du capot 22, la patte 48 puisse s'écarter radialement vers l'extérieur, puis se rapprocher radialement vers l'intérieur et être reçue dans le logement de réception extérieur 42 dans une position bien déterminée, par un effet d'encliquetage.

Selon l'exemple préféré de réalisation, le logement de réception extérieur 42 est débouchant sur les deux faces opposées de la paroi périphérique 26 de la bague extérieure 18.

Le bossage 52 en saillie vers l'intérieur est non débouchant vers l'extérieur et assure l'étanchéité à l'air du dispositif de support-moteur 15 de l'intérieur vers l'extérieur.

De plus, le bossage 52 délimite un réceptacle 60 en forme de cuvette de forme générale circulaire apte à recevoir le pion intérieur 41. Le réceptacle 60 assure également une fonction de limitation de jeu en réduisant l'espace entre le pion intérieur 41 et logement de réception extérieur 42.

Le diamètre intérieur du réceptacle 60 doit être légèrement supérieur aux dimensions du pion intérieur 41 pour permettre un jeu réduit de l'ordre de ± 1 mm.

Ainsi, lorsque le capot 22 est mis en place, il existe un jeu réduit évitant des déplacements relatifs trop importants de la bague intérieure 16 par rapport à la bague extérieure 18.

La rampe intérieure 58 est apte à coopérer avec l'extrémité du pion intérieur 41 lors de la mise en place du capot 22 pour permettre à la patte 48 de s'écarter radialement vers l'extérieur puis de se rapprocher radialement vers l'intérieur pour la réception du pion intérieur 41 dans le réceptacle 60.

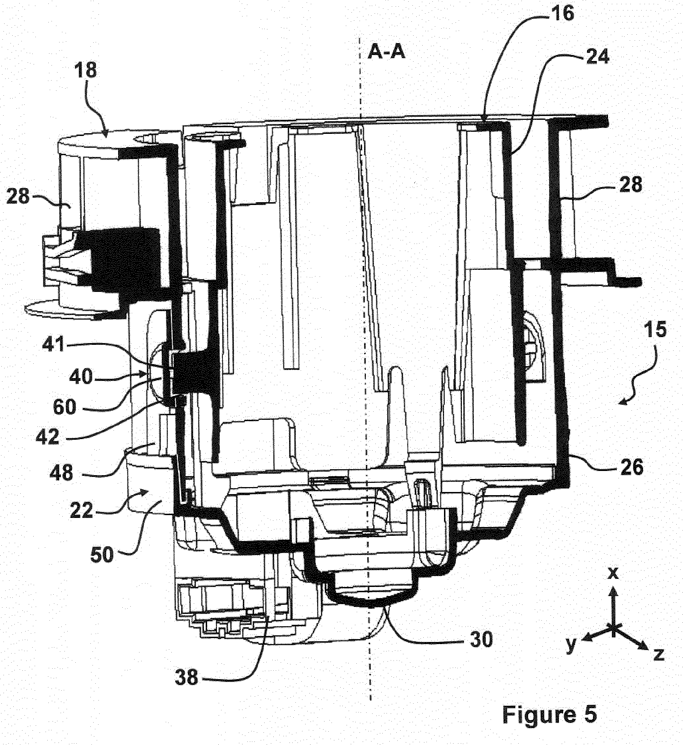

Le capot 22 est mis en place en le rapprochant de la bague intérieure 16, dans la direction axiale, de sorte que les languettes 32 viennent s'écarter et coopérer avec les ergots 34, et que simultanément les pattes 48 viennent s'écarter puis se rapprocher dans la position représentée sur la figure 5 pour contrôler l'amplitude des déplacements relatifs entre la bague intérieure 16 et la bague extérieure 18.

On comprendra que les pattes 48 jouent ainsi le rôle d'éléments de centrage à l'égard des pions intérieurs 41 dont ils viennent limiter les déplacements.

La patte 48 coopérant avec le pion intérieur 41 assurent conjointement une fonction complémentaire de butée.

De façon additionnelle, la paroi périphérique 26 comporte une partie déformée pour se rapprocher de la bague extérieur 18, c'est-à-dire de la paroi périphérique 26, dans la région de la butée 40, comme on le voit mieux sur les figures 3 et 5. Cela permet d'utiliser des pions intérieurs 41 de longueur limitée et de réduire le porte-à-faux ainsi généré.

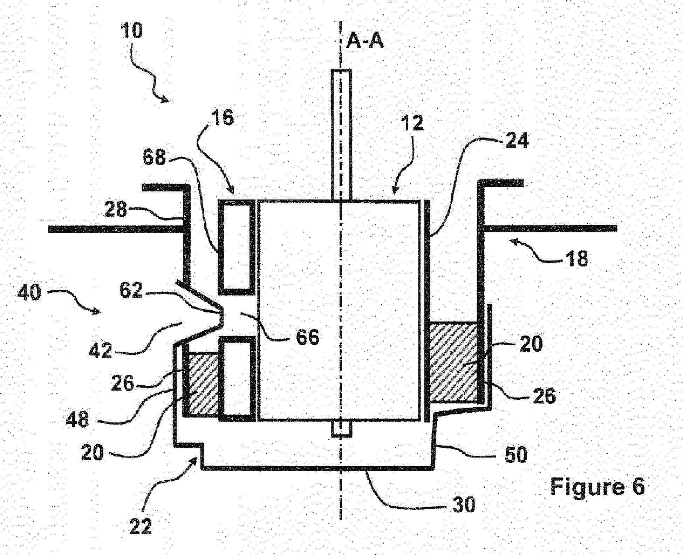

La figure 6 est une vue schématique en coupe d'une variante de réalisation du dispositif de support-moteur 15 selon la présente invention dans laquelle le capot 22 intègre une partie de la butée 40.

Selon la variante de réalisation de la figure 6, la patte 48 du capot 22 intègre un pion extérieur 62, avantageusement venue de moulage, qui s'étend radialement vers l'intérieur.

Il est possible aussi, en variante, de rapporter le pion extérieur 62 sur la patte 48 du capot 22 au lieu de les réaliser lors du moulage du capot 22. Le pion extérieur 62 est alors fixé sur la patte 48 du capot 22, par exemple, par collage, vissage ou tout procédé d'assemblage analogue.

Le pion extérieur 62 a une forme généralement conique et traverse successivement le logement de réception extérieur 42 de la bague extérieure 18 et un logement de réception intérieur 66 de la bague intérieure 16. Préférentiellement, le pion extérieur 62 est reçu sans jeu dans le logement de réception extérieur 42 de la bague extérieure 18 et avec un jeu réduit dans le logement de réception intérieur 66 de la bague intérieure 16.

Le logement de réception intérieur 66 de la bague intérieure 16 est aménagée dans la paroi périphérique 24 de la bague intérieure 16 dans une partie 68 de la paroi périphérique 24, qui se trouve plus éloignée de l'axe de rotation A-A que le reste de la paroi périphérique 24. Un tel agencement permet de rapprocher le logement de réception extérieur 42 et le logement de réception intérieur 66 dans la direction radiale et de diminuer la longueur du pion extérieur 62, donc le porte-à-faux créé.

De façon analogue au pion intérieur 41 précédemment décrit, le pion extérieur 62 peut également présenter une section transversale en forme de croix, mais d'autres formes sont envisageables, comme par exemple des formes cylindriques. De plus, avantageusement, le pion extérieur 62 présente une section transversale en forme de croix dont les arêtes sont inclinées afin de présenter un profil conique.

De plus, selon diverses configurations, il est possible de déformer localement la paroi périphérique 24 de la bague intérieure 16 et/ou la paroi périphérique 26 de la bague extérieure 18, dans la région de la butée 40, pour diminuer l'espace entre la paroi périphérique 24 de la bague intérieure 16 et la paroi périphérique 26 de la bague extérieure 18 dans la direction radiale, et donc le porte-à-faux du pion intérieur 41 et/ou du pion extérieur 62.

D'autres formes de réalisation sont également possibles. En particulier, il est envisageable aussi que la butée soit issue de la bague extérieure et reçue avec jeu dans un logement de réception aménagé dans la bague intérieure 16.

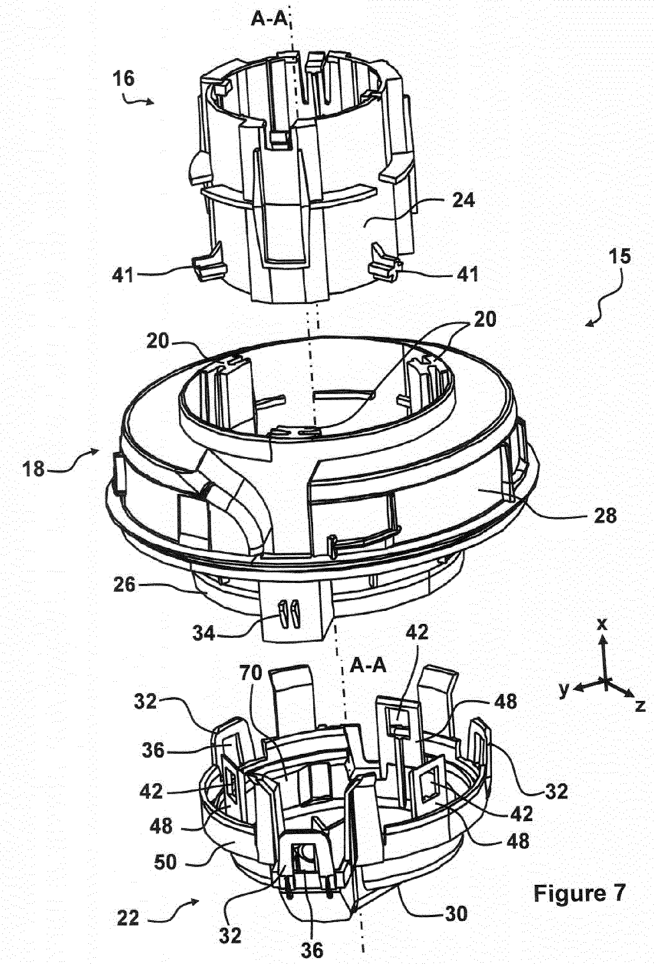

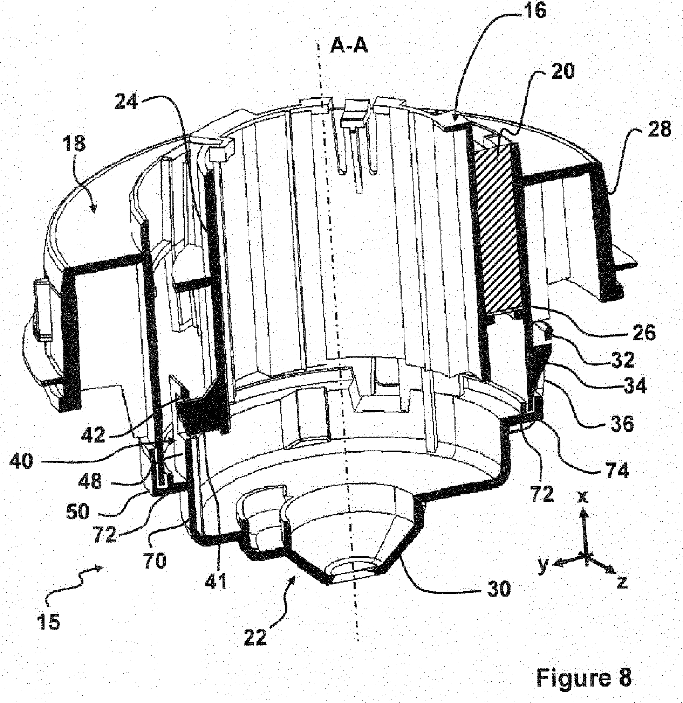

Les figures 7 et 8 sont respectivement une vue en perspective éclatée et à l'état assemblé du dispositif de support-moteur 10 selon une autre variante de réalisation. Selon la variante de réalisation présentée sur les figures 7 et 8, le patte 48, coopérant avec le pion intérieur 41 pour former la butée 40, s'étend dans la direction axiale depuis le capot 22 à l' opposé de la paroi de fond 30 depuis un anneau intérieur 70 du capot 22.

L'anneau intérieur 70 est disposé entre le bord 50 du capot 22 et l'axe de rotation A-A, de sorte que, lors de la mise en place du capot 22, la patte 48 soit disposée dans l'espace compris entre la bague intérieure 16 et la bague extérieure 18.

De façon complémentaire, le capot 22 comporte une paroi transversale 72 reliant le bord 50 et l'anneau intérieur 70 du capot 22. Par ailleurs, la paroi transversale 72 comprend avantageusement, une rainure 74 coopérant, de façon étanche, avec la paroi périphérique 26 de la bague extérieure 18.

Alternativement, la fonction de clipage du capot 22 est susceptible d'être associée avec la fonction de butée.

L'invention concerne également le groupe moto-ventilateur 10 comportant le dispositif de support-moteur 15 tel que défini précédemment.

Le dispositif de support-moteur 15 de la présente invention trouve une application préférentielle pour les installations de chauffage, ventilation et/ou climatisation de véhicules automobiles.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Dispositif de support-moteur (15), comprenant une bague intérieure (16) apte à loger un moteur (12), une bague extérieure (18) apte à loger la bague intérieure (16),
dans lequel au moins un élément de découplage (20) est interposé entre la bague intérieure (16) et la bague extérieure (18),
dans lequel le dispositif de support-moteur (15) comprend un capot (22) venant coiffer et fermer la bague extérieure (18), dans lequel le dispositif de support-moteur (15) comprend au moins une butée (40) pour limiter les déplacements relatifs de la bague intérieure (16) par rapport à la bague extérieure (18),
dans lequel la butée (40) comporte un pion (41, 62) coopérant avec au moins un logement de réception (42, 66), dans lequel le pion (41, 62) est reçu avec jeu dans le logement de réception (42, 66),
dans lequel le capot (22) comprend une patte (48) dans laquelle est agencé le logement de réception (42).

2. Dispositif selon la revendication 1, dans lequel le pion (41) est agencé sur la bague intérieure (16).

3. Dispositif selon l'une quelconque des revendications 1 ou 2, dans lequel le logement de réception (42, 66) est traversant.

4. Dispositif selon l'une des revendications là 3, dans lequel la patte (48) comporte une rampe intérieure (58) apte à coopérer avec le pion (41) lors de la mise en place du capot (22) pour permettre à la patte (48) de s'écarter radialement vers l'extérieur puis de se rapprocher radialement vers l'intérieur pour la réception du pion (41) dans le logement de réception (42) et/ou le réceptacle (60) .

5. Dispositif selon l'une quelconque des revendications 1 à 4, dans lequel le pion (42, 66) présente une section transversale en forme de croix.

6. Dispositif selon l'une quelconque des revendications précédentes, comportant deux butées (40).

7. Dispositif selon la revendication 6, dans lequel les deux butées (40) sont disposées non alignées.

## Patentansprüche

1. Motorträgervorrichtung (15), die einen Innenring (16), der einen Motor (12) aufnehmen kann, einen Außenring (18), der den Innenring (16) aufnehmen kann, enthält,
wobei mindestens ein Entkopplungselement (20) zwischen den Innenring (16) und den Außenring (18) eingefügt ist,
wobei die Motorträgervorrichtung (15) eine Abdeckung (22) enthält, die den Außenring (18) bedeckt und verschließt,
wobei die Motorträgervorrichtung (15) mindestens einen Anschlag (40) enthält, um die relativen Verschiebungen des Innenrings (16) bezüglich des Außenrings (18) zu begrenzen,
wobei der Anschlag (40) einen Stift (41, 62) aufweist, der mit mindestens einem Aufnahmesitz (42, 66) zusammenwirkt,
wobei der Stift (41, 62) mit Spiel in dem Aufnahmesitz (42, 66) aufgenommen wird,
wobei die Abdeckung (22) eine Lasche (48) enthält, in der der Aufnahmesitz (42) eingerichtet ist.

2. Vorrichtung nach Anspruch 1, wobei der Stift (41) auf dem Innenring (16) eingerichtet ist.

3. Vorrichtung nach einem der Ansprüche 1 oder 2, wobei der Aufnahmesitz (42, 66) durchgängig ist.

4. Vorrichtung nach einem der Ansprüche 1 bis 3, wobei die Lasche (48) eine innere Rampe (58) aufweist, die beim Einsetzen der Abdeckung (22) mit dem Stift (41) zusammenwirken kann, um es der Lasche (48) zu ermöglichen, sich radial nach außen abzuspreizen und sich dann radial nach innen anzunähern zur Aufnahme des Stifts (41) im Aufnahmesitz (42) und/oder im Aufnahmebehälter (60).

5. Vorrichtung nach einem der Ansprüche 1 bis 4, wobei der Stift (42, 66) einen kreuzförmigen Querschnitt aufweist.

6. Vorrichtung nach einem der vorhergehenden Ansprüche, die zwei Anschläge (40) aufweist.

7. Vorrichtung nach Anspruch 6, wobei die zwei Anschläge (40) nicht fluchtend angeordnet sind.

## Claims

1. Motor support device (15), comprising an inner ring (16) able to house a motor (12), an outer ring (18) able to house the inner ring (16), in which at least one decoupling element (20) is interposed between the inner ring (16) and the outer ring (18), in which the motor support device (15) comprises a cap (22) which caps and closes the outer ring (18),
in which the motor support device (15) comprises at least one stop piece (40) for limiting the relative movements of the inner ring (16) with respect to the outer ring (18),
in which the stop piece (40) comprises a pin (41, 62) collaborating with at least one receiving housing (42, 66),
in which the pin (41, 62) is housed with clearance in the receiving housing (42, 66),
in which the cap (22) comprises a tab (48) in which the receiving housing (42) is arranged.

2. Device according to Claim 1, in which the pin (41) is arranged on the inner ring (16).

3. Device according to either one of Claims 1 and 2, in which the receiving housing (42, 66) is a through-housing.

4. Device according to one of Claims 1 to 3, in which the tab (48) comprises an inner ramp (58) able to collaborate with the pin (41) as the cap (22) is being fitted so as to allow the tab (48) to move away radially towards the outside and then return radially towards the inside to accept the pin (41) in the receiving housing (42) and/or the receptacle (60).

5. Device according to any one of Claims 1 to 4, in which the pin (42, 66) has a cross-shaped cross section.

6. Device according to any one of the preceding claims, comprising two stop pieces (40).

7. Device according to Claim 6, in which the two stop pieces (40) are positioned such that they are not aligned.
